# EUROPÄISCHE PATENTSCHRIFT

(11) **EP 1 897 436 B1**
(45) Veröffentlichungstag und Bekanntmachung des Hinweises auf die Patenterteilung: **20.11.2013**
(21) Anmeldenummer: 07115635.0
(22) Anmeldetag: 04.09.2007
(51) Int. Cl.: C04B 30/00, A01K 1/015, B01J 20/02, C09K 3/32

(54) **Mineralisches Granulat, Verfahren zu seiner Herstellung und Verwendung des Granulats**
Mineral granulate, method for its manufacture and application of the granulate
Granulat minéral, son procédé de fabrication et utilisation du granulat

(30) Priorität: 05.09.2006 DE 102006041553
(43) Veröffentlichungstag der Anmeldung: 12.03.2008
(73) Patentinhaber: Xella Baustoffe GmbH, 47119 Duisburg (DE)
(72) Erfinder: Kornmayer, Ingrid, Dr. Xella Baustoffe GmbH, 80687 München (DE); Walther, Hartmut, Dr. Xella Baustoffe GmbH, 14806 Belzig (DE)
(74) Vertreter: Solf, Alexander

(56) Entgegenhaltungen:
- EP-A- 0 007 586
- EP-A- 0 716 806
- DE-A1- 19 839 240

## Beschreibung

Die Erfindung betrifft ein durch Granulierung hergestelltes mineralisches poröses Granulat sowie ein Verfahren zu dessen Herstellung und die Verwendung des Granulats. Derartige Granulate werden insbesondere als Adsorptionsmittel für flüssige Medien, z.B. als Tierstreu oder Ölbinder verwendet.

Bekannt ist, hoch saugfähige Granulate aus gebrochenem und klassiertem Poren- oder Schaumbetongranulat als Tierstreu zu verwenden. Bei derartigen Granulaten ist insbesondere von Vorteil, dass das Schüttgewicht lediglich 300 bis 500 g/l beträgt und das Granulat ein Abfallprodukt sein kann.

Bekannt sind ferner Granulate auf Bentonit-Basis. Bentonit ist ein hochsaugfähiges Tonmineral, welches nach dem Kontakt mit Wasser in erheblichem Maße aufquillt und Agglomerate bildet. Bei der Verwendung von Bentonit als Tierstreu bilden sich Klumpen, welche aus der restlichen Streu leicht entnommen und entsorgt werden können. Störende Geruchsentwicklung kann vermieden werden, indem mit Flüssigkeit kontaminierte Teile der Streu entfernt werden und die restliche Streu weiter verwendet wird, wodurch der Verbrauch an Tierstreu verringert werden kann. Nachteile einer Verwendung von reinem Bentonit sind die Kosten für den Rohstoff sowie das hohe Schüttgewicht von 900 bis 1.000 g/l. (Die Schüttgewichte sind im Rahmen der Erfindung nach DIN EN 1097-3: 1998 ermittelte Schüttgewichte).

Es wurden darüber hinaus bereits Bemühungen unternommen, die Vorteile beider Produkte mit einander zu verbinden.

Aus der DE 195 09 747 A1 ist ein poröses Granulat zur Ad- bzw. Absorption von Flüssigkeiten und Gasen, insbesondere zur Verwendung als Hygiene-Tierstreu bekannt, das aus mit einer Tonmineralkomponente bedeckten Porenbetonkörnern besteht und dessen Korngröße zwischen 0,5 und 4, vorzugsweise zwischen 0,5 und 2 mm liegen soll. Die Tonmineralkomponente soll in möglichst feinteiliger Form als Mehl vorliegen, wodurch die Quellfähigkeit begünstigt sein soll. Das poröse Trägermaterial soll je nach Herstellungsverfahren in unterschiedlichen Schüttgewichten und Korngrößen verfügbar sein, wobei Schüttgewichte von 300 und 400 g/l bevorzugt werden. Zur Herstellung werden Wasser und Bentonitmehl zu einer dünnbreiigen Schlämme aufbereitet, in welche Porenbetonmaterial mit einer Korngröße kleiner als 1,5 mm eingestreut werden. Diese Primärkörnung soll mikroporiges Calciumsilikat sein und im Mischvorgang mit einer gleichmäßigen Schichtdicke der Bentonitschlämme umhüllt werden, wobei die fertigen Granulate eine Größe von etwa 2 mm aufweisen sollen. Ein durchschnittliches Schüttgewicht dieser Granulate wird mit etwa 450 g/l angegeben. Der Anteil des hoch quellfähigen Tonminerals soll von 25 bis 50 Gew.-% reichen und der Anteil des Porenbeton- bzw. Calciumsilkathydratmaterials soll zwischen 50 bis 75 Gew.-% liegen. Im Querschnitt betrachtet weisen die Granulate einen relativ großen Kern aus porösem Calciumsilikathydrat-Material und einen im Verhältnis zum Kern dünnen Mantel aus Bentonit auf. Gemäß dieser Druckschrift kann darüber hinaus eine Wiederbefeuchtung der im Heißluftstrom getrockneten Granulate stattfinden, um weiteres feinteiliges Bentonit aufzupudern und so die Schichtdicke des Bentonits auf eine bestimmte Dicke zu vergrößern.

Aus der EP 0 716 806 A1 ist ebenfalls ein Granulat zur Verwendung als Tierstreu bekannt, bei dem 25 bis 70 Gewichtsanteile eines hoch quellfähigen Materials und 30 bis 75 Gewichtsteile eines Porenbetongranulats verwendet werden. Gemäß dieser Druckschrift ist es zusätzlich zu den Ausführungsformen gemäß der DE 195 09 747 A1 möglich, beide Materialien in der Art zu mischen, dass eine im Querschnitt homogene Struktur innerhalb der Granalie erzielt wird. Das Porenbetonmaterial soll zur Herstellung eines homogen aufgebauten Granulats Korngrößen < 0,5 mm bei einem Bentonitanteil um 25 Gew.-% aufweisen.

Des Weiteren ist aus der DE 198 43 887 B4 ein Hygienegranulat auf Basis von Calciumsilikathydrat und Bentonit bekannt, wonach das Granulat pelletierte Granalien mit einem zweischichtigen Aufbau mit einem Kern und einer Schale bzw. einem Mantel aufweist, wobei der Kern überwiegend Calciumsilikathydrat und der Mantel ein Gemisch aus feinteiligem, quellfähigem Tonmineral und feinteiligem Calciumsilikathydrat aufweist. Der Vorteil dieses Granulates besteht darin, dass der Mantel aus einem Gemisch aus feinteiligem, quellfähigem Tonmaterial und feinteiligem Calciumsilikathydrat bei der Aufnahme von Flüssigkeit nicht undurchlässig wird und somit ein relativ großer Anteil der Flüssigkeit in den Kern weitergeleitet werden kann.

Bei einer Verwendung derartiger Granulate als Tierstreu oder Pflanzgranulat ist eine besonders hohe Abriebstabilität wünschenswert, da die Granulate im direkten Wohn- bzw. Lebensbereich des Menschen Verwendung finden und somit keinen Staub bzw. Abrieb verursachen sollten.

In diesem Zusammenhang macht insbesondere die Verarbeitung und Bindung von mehlförmigem bzw. staubförmigem Material Probleme, indem bei der Herstellung das Material sich schlecht mischen und einbinden lässt und im fertigen Produkt zum Ablösen und damit zur Bildung von Abrieb und Staub neigt.

DE 198 39 240 A1 offenbart mineralische Granulate aus agglomerierten, mikroporösen Calciumsilikathydrat-Materialkörnern mit Korngrößen unter 1200 µm, wobei in der Matrix der Granalien eine quellfähige und klebende Substanz enthalten ist. Das Schüttgewicht der Granalien liegt zwischen 200 und 750 g/l. Das befeuchtete Calciumsilikathydrat-Material wird zu Granalien pelletiert. Danach werden die Granalien getrocknet und als Tierstreu sowie als Ab-/Adsorptionsmittel verwendet.

Aufgabe der vorliegenden Erfindung ist, ein Mehlpartikel aufweisendes Granulat zu schaffen, das ein hohes Adsorptionsvermögen und eine hohe Speicherkapazität für Flüssigkeiten sowie gute Festigkeiten, eine gute Abriebsstabilität und eine gute Geruchsbindung aufweist. Darüber hinaus soll das Granulat aus überwiegend Abfallstoffen kostengünstig herstellbar und ein möglichst helles, insbesondere graues bis weißes Produkt sein. Des weiteren soll das Granulat nicht toxisch, umweltverträglich und bei normalen Raum- und Außentemperaturen temperaturstabil sein.

Es wurde überraschenderweise gefunden, dass ein Granulat aus Granalien sehr gute Adsorptionseigenschaften, insbesondere sehr gute Tierstreueigenschaften und dabei eine sehr gute Abriebstabilität und Festigkeit aufweist, das herstellbar ist aus mindestens einem mehlförmigen oder mehlförmigen und körnigen Calciumsilikathydrat-Material, wie körnigen und/oder feinteiligen bzw. mehlförmigen Poren- oder Schaumbetonmaterial und einem Granulierhilfsmittel, insbesondere für die Mehlkomponente, in Form von insbesondere pulverförmigem Magnesiumoxid und/oder Calciumoxid und/oder deren Hydroxide und/oder Bentonit und/oder Stärke und/oder Stärkederivate, wie Glukosesirup und/oder Dextrinlösung (im folgenden wird statt Stärke und/oder Stärkederivate nur Stärke angegeben). Das neue Granulat hat insbesondere auch eine relativ glatte Oberfläche und gewährleistet eine sehr große Wasseraufnahmemenge sowie eine relativ geringe Schüttdichte von z.B. < 650 g/l. Als besonderen Effekt weisen die Granalien des erfindungsgemäßen Granulats aufgrund der Verwendung von Magnesiumoxid und/oder Calciumoxid und/oder deren Hydroxiden und/oder Bentonit und/oder Stärke als insbesondere staubbindendes und die Granalienbildung förderndes Granulierhilfsmittel eine helle bis weiße gefällige Farbe auf.

Ein weiterer Vorteil des erfindungsgemäßen durch Granulierung bzw. Agglomerierung erzeugten Granulats ist, dass aufgrund der Verwendung von Magnesiumoxid und/oder Calciumoxid und/oder deren Hydroxiden und/oder Bentonit und/oder Stärke sich eine überraschend verbesserte Geruchsbindung einstellt. Es ist derzeit noch nicht bekannt, woran das liegt.

Als weiterer Vorteil ist zu nennen, dass ein Ausgangsstoff des erfindungsgemäßen Granaliengranulats, nämlich Calciumsilikathydrat-Material, insbesondere als Poren- und/oder Schaumbetonabfallmaterial; insbesondere überwiegend Tobermorit als Mineral aufweisend, bei der Herstellung von Poren- und/oder Schaumbetonelementen anfällt. Insbesondere fallen bei der industriellen Herstellung von Poren- und/oder Schaumbetonformkörpern als auch beim Aufteilen von Poren- und/oder Schaumbetonquadern Mehlfraktionen dieser Materialien an, die nach einer Ausführungsform der Erfindung zur Herstellung des erfindungsgemäßen Granaliengranulats ausschließlich verwendet werden.

Darüber hinaus wird nach einer Variante der Erfindung zudem körniges Calciumsilikathydrat-Material, insbesondere in Form von bei der Herstellung anfallendem Porenbeton- und/oder Schaumbetonbruchmaterial, zusammen mit den Mehlen verwendet.

Als Granulierhilfsstoffe bzw. Granuliervermittler dienen erfindungsgemäß Magnesiumoxid und/oder Calciumoxid und/oder deren Hydroxide und/oder Bentonit und/oder Stärke. Diese Rohstoffe sind ebenfalls kostengünstig erhältlich und einfach verarbeitbar. Das erfindungsgemäße Granulat kann in handelsüblichen und unkomplizierten Granuliervorrichtungen hergestellt werden, wodurch die Herstellungskosten des Granaliengranulats insgesamt sehr niedrig gehalten werden können.

Die Granalien des Granulats weisen außerdem eine gute Kornfestigkeit für den Einsatz als Schüttgut und eine gute Rieselfähigkeit und damit auch eine gute Verdichtbarkeit bei z.B. Vibrationseinwirkungen auf.

Die Erfindung wird durch Ansprüche 1-18 charakterisiert.

Die vorliegende Erfindung betrifft somit ein Granaliengranulat, aufweisend Granalien, hergestellt durch Granulieren von Mischungen aus mindestens den Bestandteilen Calciumsilikathydrat-Material in Mehlform oder in Mehlform und körniger Form einerseits sowie Magnesiumoxid und/oder Calciumoxid und/oder deren Hydroxide und/oder Bentonit und/oder Stärke.

Die gleichwertigen Begriffe mehlförmig oder pulverförmig oder staubförmig oder feinteilig bedeuten im Rahmen der vorliegenden Erfindung feinteilige Teilchengrößen in herstellungsbedingter Kornverteilung, insbesondere Gaußscher Kornnormalverteilung mit Korngrößen bis 1200 µm und einem Maximum der Kornverteilung unter 500 µm; körnig meint Korngrößen von 1000 µm bis z.B. 8 mm, vorzugsweise mit einem Maximum der Kornverteilung zwischen 2 und 5 mm. (Im folgenden wird für die feinteiligen Fraktionen hauptsächlich der Begriff Mehl, oder Mehlfraktion oder mehlförmig verwendet.) (Gaußsche Kornnormalverteilung bzw. Gaußsche Kornverteilung meint auch im folgenden eine gleichmäßige oder fast gleichmäßige idealisierte Häufigkeitsglockenkurvenverteilung oder angenäherte Häufigkeitsglokkenkurvenverteilung mit einem Maximum bzw. Maximumbereich.)

Unter Granalien, die das Granaliengranulat bilden, sind im Rahmen der Erfindung eigenfeste körnige Produkte zu verstehen, die durch ein agglomerierendes Granulierverfahren und nicht durch Brechen oder Mahlen hergestellt sind und die gut rieselfähig sind und deren Körner eine für den jeweiligen Anwendungszweck ausreichende bis sehr gute, relativ abriebfeste mechanische Eigenfestigkeit aufweisen. Aufgrund der Herstellung der Granalien ergibt sich ein relativ enger Korngrößenbereich z.B. mit Gaußscher Kornverteilung und annähernd einheitlicher geometrischer Form, z.B. mit Kugelform und/oder angenäherter Kugelform, der Granalien. Die Granalien werden z.B. vollständig aus Mehl bzw. Staub bzw. Pulver allein oder zusammen mit körnigem Material hergestellt, und zwar als Granalien mit abgerundeten Oberflächenkonturen. Das zur Herstellung der Granalien verwendete Poren- und/oder Schaumbetonmaterial ist vorzugsweise Abfallmaterial aus der Poren- und/oder Schaumbetonproduktion, das zur Herstellung der erfindungsgemäßen Produkte gegebenenfalls aufbereitet, z.B. nachgebrochen oder gemahlen und klassiert wird.

Mit Calciumsilikathydrat-Material bzw. Porenbeton- und Schaumbetonmaterial wird im Rahmen der vorliegenden Erfindung ein insbesondere zumindest Mikroporen aufweisendes, vorzugsweise ein Mikroporen und aus Bläh- oder Schaumporen entstandene Makroporen aufweisendes synthetisches, hydrothermal erzeugtes Material bezeichnet. Es ist insbesondere ein Poren- und/oder Schaumbetonmaterial, insbesondere hauptsächlich das Mineral Tobermorit aufweisend, wobei das Poren- und/oder Schaumbetonmaterial Poren- und/oder Schaumbetonmehl oder Poren- und/oder Schaumbetonmehl und körniges Poren- und/oder Schaumbetonmaterial mit Ausfallkörnungen zwischen einer Mehlfraktion und einer körnigen Fraktion sein kann.

Mikroporen sind Poren, die bei der Hydrothermalhärtung entstehen, indem Wasser entweicht und dabei Freiräume in Form von feinen Kapillarenkanälen hinterlässt und durch Zwischenräume zwischen Calciumsilikathydratkristallen (CSH-Kristalle). (Im folgenden wird "Calciumsilikathydrat" auch mit "CSH" abgekürzt angegeben.)

Erfindungsgemäß vorgemischte Trockengemenge für das Granulieren weisen 20 bis 100 Gew.-%, insbesondere 50 bis 75 Gew.-% CSH-Materialmehl, z.B. Poren- und/oder Schaumbetonmehl, und 0,5 bis 10 Gew.-%, insbesondere 2 bis 4 Gew.-% Granulierhilfsmittel, vorzugsweise in Form von MgO-Pulver, auf. Ein jeweiliger Rest besteht aus dem körnigen CSH-Material.

Die Granulierhilfsmittel, insbesondere MgO und/oder CaO sowie deren Hydroxide werden zweckmäßigerweise in Mehl- bzw. Pulverform verwendet.

Als pulverförmiges Magnesiumoxid (MgO) wird vorzugsweise gebrannte bzw. kaustische Magnesia, insbesondere chinesische kaustische Magnesia, und als Hydroxid pulverförmiges Magnesiumhydroxid (Mg(OH)₂) verwendet. Als insbesondere pulverförmige Calciumoxid-Komponente wird insbesondere Weißfeinkalk (CaO) und/oder mindestens ein anderer gebrannter Feinkalk, wie beispielsweise Wasserfeinkalk oder hydraulischer Kalk und/oder gelöschter Weißfeinkalk (Ca(OH)₂) und/oder mindestens ein anderer gelöschter Feinkalk oder Kalk, verwendet. Als Stärke wird z.B. eine kaltwasserlösliche Kartoffelstärke verwendet.

Nach einer ersten Ausführungsform der Erfindung wird mindestens ein Mehl aus mindestens einem Calciumsilikathydrat-Material in einem sogenannten Pelletiermischer bzw. Granuliermischer mit mindestens einem mehlförmigen Granulierhilfsmittel, ausgewählt aus der Gruppe MgO, CaO, Mg(OH)₂, Ca(OH)₂, Bentonit und/oder Stärke, zunächst trocken vorgemischt und anschließend das Gemenge im Mischer während des Weitermischens mit Wasser versetzt, z.B. besprüht oder bedüst, so dass eine Granulierung bzw. Agglomerierung bzw. Pelletbildung erfolgt. (Die Begriffe Granulierung, Agglomerierung und Pelletierung werden im Rahmen der vorliegenden Erfindung gleichwertig verwendet, bevorzugt jedoch Granulierung.)

Nach Erreichen eines feuchten Granaliengranulats mit vorbestimmter Granaliengröße und/oder Granaliengrößenverteilung des Granaliengranulats wird das Granulat dem Pelletiermischer entnommen und getrocknet.

Als Calciumsilikathydrat-Produkte werden aus einer CaO- und einer SiO₂-Kompanente in üblicher Weise hydrothermal gehärtete, Mikroporen aufweisende Produkte verwendet, und/oder Calciumsilikathydrat-Produkte, die zusätzlich vor der Hydrothermalhärtung einem Blähprozess unterworfen worden sind, oder denen vor der Hydrothermalhärtung ein Schaum zugesetzt wurde, so dass im gehärteten Produkt neben aus Wasserkanälen und Kristallzwischenräumen entstandenen Mikroporen auch Makroporen vorhanden sind. Letztere sind insbesondere Porenbeton- oder Schaumbetonprodukte, von denen im Rahmen der Erfindung bevorzugt die Abfallprodukte in körniger Form (Bruchprodukte) und in Mehlform (Staubprodukte) verwendet werden, um Abfallprobleme zu lösen. Die Bruchprodukte werden gegebenenfalls weitergehend zerkleinert und klassiert, um granulierfähige Körnungen bestimmter Kornverteilungen bereitstellen zu können, oder sie werden gemahlen, um granulierfähige Mehle zu erzeugen, sofern nicht genügend Staubabfallprodukte vorhanden sind.

Besonders geeignet sind Ausgangs-Calciumsilikathydrat-Produkte aus Mehl mit folgender Kornverteilung:
1000 bis 2000 µm: 3 bis 8 Gew.-%,
500 bis 1000 µm: 20 bis 33 Gew.-%,
125 bis 500 µm: 40 bis 57 Gew.-%,
bis 125 µm: 20 bis 35 Gew.-%,
insbesondere
1000 bis 2000 µm: 4 bis 7 Gew.-%,
500 bis 1000 µm: 23 bis 27 Gew.-%,
125 bis 500 µm: 42 bis 48 Gew.-%,
bis 125 µm: 23 bis 27 Gew.-%.

Es hat sich herausgestellt, dass sich insbesondere die Mehle aus Porenbeton- und Schaumbetonprodukten mit den ausgewählten Granulierhilfsmitteln besonders gut granulieren lassen, offenbar weil deren Oberflächenstruktur in Kombination mit den Mikroporen die Agglomerierung begünstigt.

Die Mehlprodukte werden z.B. mit Wassergehalten von 2 bis 40 Gew.-%, insbesondere von 22 bis 35 Gew.-% und mit Mehlkorngrößen bis 1200 µm, insbesondere bis 1000 µm, sowie insbesondere mit Gaußschen Kornverteilungen verwendet, wobei der Bereich des Maximums z.B. zwischen 100 und 400 µm liegt. Das oder die vorzugsweise mehlfeinen Granulierhilfsmittel sind vorzugsweise trocken und haben Korngrößen bis 200 µm, insbesondere bis 125 µm, bei z.B. ebenfalls Gaußschen Kornverteilungen.

Dem in einen Granuliermischer eingebrachten trockenen Mehl und Granulierhilfsmittel wird bei laufendem Mischer Wasser in Mengen von 15 bis 50 Gew.-%, insbesondere von 20 bis 30 Gew.-% bezogen auf die Trockenmenge, z.B. durch Einsprühen oder Eindüsen in den Mischer zugesetzt und mit relativ geringer Mischenergie die Granulierung im Mischer bewirkt. Dabei werden die Mischkomponentenparameter und die Granulierenergie derart eingestellt, dass ein rieselfähiges Granulat mit abriebfesten Granalien erzeugt wird, deren Raumform im wesentlichen gerundet, z.B. im wesentlichen kugelig ist, mit Korngrößen zwischen 1 und 3 mm, insbesondere zwischen 1,5 und 2,5 mm, sowie Wassergehalte zwischen 30 und 45 Gew.-%, insbesondere zwischen 36 und 39 Gew.-%, auf. Nach dem Trocknen beträgt der Wassergehalt 2 bis 15 Gew.-%, insbesondere 3 bis 8 Gew.-%, und die Schüttdichte beträgt 450 bis 700 g/l, insbesondere 600 bis 700 g/l, und die Wasseraufnahme beträgt 70 bis 130 Gew.-%, insbesondere 80 bis 110 Gew.-%.

Die erfindungsgemäßen Granalien enthalten in ihrer Kornstruktur die Mehlpartikel des Calciumsilikathydratprodukts sowie zwischen diesen Mehlpartikeln Mg(OH)₂- und/oder Ca(OH)₂-Kristall- oder -Kristallitphasen und/oder Bentonit und/oder Stärke, die die Calciumsilikathydrat-Mehlpartikel miteinander verkitten, wobei insbesondere bei Verwendung von MgO und/oder CaO besonders abriebfeste Granalien entstehen. Offenbar bewirkt die Hydroxidbildung dieser Oxide bei der Granulierung zumindest eine bindende Oberflächenreaktion mit Calciumsilikathydrat-Mehlpartikeln, die insbesondere im Falle der Verwendung von MgO zu besonders festen Granalien führt.

Zur Bindung von mitunter vorhandenem Reststaub auf den Granalien und zur Klumpenbildung und Erhöhung der Wasseraufnahmekapazität ist es zweckmäßig, in einem Nachgranulierprozeß Celluloseether, insbesondere in Form von Carboxylmethylcellulose, z.B. von Alkalimetallcarboxylmethylcellulose, wie Natriumcarboxylmethylcellulose und/oder Kaliumcarboxylmethylcellulose, zuzusetzen, vorzugsweise in Mengen von 0,2 bis 2 Gew.-%, insbesondere von 0,2 bis 1, 0 Gew.-%, bezogen auf das Gemenge aus Calciumsilikathydratprodukt und Granulierhilfsmittel. Durch den Zusatz des Celluloseethers können Granulierhilfsmittel eingespart werden, weil Celluloseether auch das Granulieren unterstützen. Ein weiterer Vorteil dieses Zusatzmittels ist, dass es bei einer Menge von 3 bis 10 M-% im gebrauchsfähigen Granulat, z.B. bei Verwendung als Tierstreu, Klumpung bewirkt und die Wasseraufnahme erhöht.

Es liegt im Rahmen der Erfindung, weitere übliche Zusatzmittel, wie Farbstoffe, Duftstoffe, geruchsbindende Stoffe, Pigmente, Katalysatoren, Düngemittel oder Indikatoren zuzusetzen, z.B. Duftstoffe in Mengen bis 1,0 Gew.-%, bezogen auf die Trockensubstanz der Granalien.

Ein nach dieser ersten Ausführungsform der Erfindung hergestelltes Granulat weist Granalien auf, die enthalten:
78 bis 97 Gew.-% Calciumsilikathydrat-Materialmehl,
1 bis 5 Gew.-% Granulierhilfsmittel,
2 bis 15 Gew.-% adsorptiv gebundendes Wasser, nach Trocknung,
0 bis 2 Gew.-% Carboxylmethylcellulose,
insbesondere
90 bis 96 Gew.-% Calciumsilikathydrat-Materialmehl,
2 bis 4 Gew.-% Granulierhilfsmittel, insbesondere Mg(OH)₂,
2 bis 5 Gew.-% adsorptiv gebundendes Wasser,
0 bis 1 Gew.-% Carboxylmethylcellulose,
wobei das Granulat Schüttgewichte von 500 bis 700 g/l, insbesondere von 500 bis 600 g/l, und eine Wasseraufnahme von 70 bis 180 Gew.-%, insbesondere von 80 bis 130 Gew.-%, aufweist.

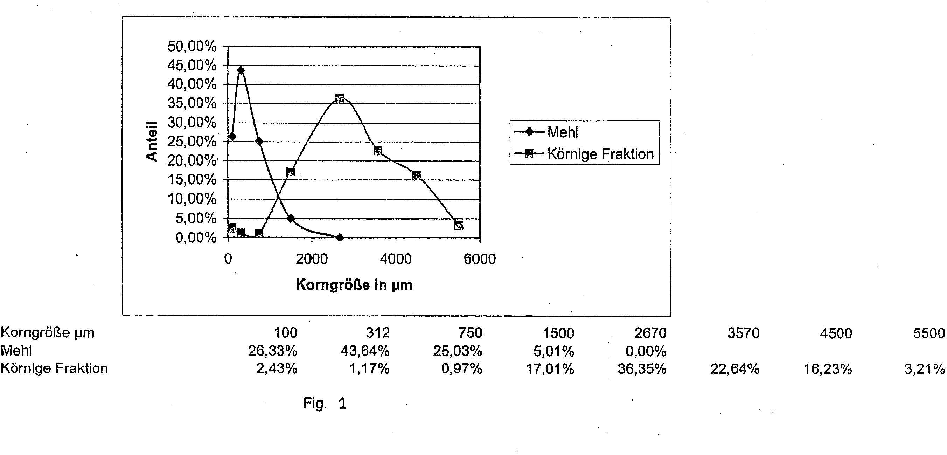

Eine zweite besonders bevorzugte Ausführungsform der Erfindung sieht vor, ein Calciumsilikathydrat-Materialgemenge mit einer sogenannten Ausfallkörnung zu verwenden, d.h., ein Calciumsilikathydrat-Materialmehl mit einem körnigen Calciumsilikathydrat-Material zu mischen, wobei Kornfraktionen zwischen den beiden Produkten fehlen oder nur in untergeordneten Mengen von z.B. unter 10 Gew.-%, vorzugsweise unter 5 Gew.-%, vorhanden sind. Beispielhaft wird eine derartige Zusammensetzung in Fig. 1 dargestellt. Fig. 1 zeigt die Kornverteilung eines Mehles (rhombische Punkte) und die Kornverteilung eines körnigen Produktes (quadratische Punkte), jeweils aus Porenbetonabfallmaterial. Die beiden Kornverteilungskurven schneiden sich bei Körnungen zwischen 1 und 2 mm. Die Körnungen im Bereich von 2 bis 0,5 mm liegen jeweils unter 10 Gew.-% und fallen unter den Begriff "Ausfallkörnung", wie er erfindungsgemäß verstanden werden soll.

Insofern werden Calciumsilikathydratmaterialmehle mit Korngrößen unter 1000 µm, insbesondere unter 500 µm, insbesondere mit Kornverteilungsmaxima unter 500 µm, mit körnigen Calciumsilikathydrat-Material-Kornfraktionen vermengt, die die folgenden Kornverteilungen aufweisen:
> 7 mm: bis 10 Gew.-%
5 bis 7 mm: 10 bis 30 Gew.-%,
4 bis 5 mm: 25 bis 40 Gew.-%,
3,15 bis 4 mm: 25 bis 40 Gew.-%,
1 bis 3,15 mm: 25 bis 40 Gew.-%,
< 1 mm: bis 10 Gew.-%,
insbesondere
> 7 mm: bis 7 Gew.-%
5 bis 7 mm: 10 bis 24 Gew.-%,
4 bis 5 mm: 27 bis 34 Gew.-%,
3,15 bis 4 mm: 27 bis 34 Gew.-%,
1 bis 3,15 mm: 27 bis 34 Gew.-%,
< 1 mm: bis 4 Gew.-%.

Das Kornverteilungsmaximum liegt dabei z.B. zwischen 2,5 und 4 mm.

Die Mischungsverhältnisse von Mehlfraktion zu körniger Kornfraktion beträgt z.B.:
Mehlfraktion zu Kornfraktion = 3 zu 1 Gew.-% bis 2 zu 3, insbesondere 2 zu 1 Gew.-%.

Besonders vorteilhaft bei dieser Ausführungsform der Erfindung ist, dass besonders abriebfeste Granalien mit hoher Festigkeit erzielbar sind, deren Oberflächenstruktur zudem abgerundete Konturen und weniger Zerklüftungen aufweisen, weil die Porenfragmente der Makroporen weitestgehend durch die Mehlfraktionen abgedeckt sind. Zudem gewährleisten diese Granalien besonders hohe Wasseraufnahmekapazitäten. Auch in diesem Fall verkitten z.B. die Granulierhilfsmittel Kristallphasen oder Kristallitphasen der Hydroxide oder Hydroxidphasen die Calciumsilikathydrat-Partikel zu abriebfesten Granalien hoher Festigkeit. Die Granulate entsprechen in ihrer Zusammensetzung der Zusammensetzung, die oben für die aus den Mehlen hergestellten Produkte angegeben sind. Die Granulate dieser Ausführungsform können außerdem auch die angegebenen Zusatzstoffe und Zusatzmittel enthalten. Sie sind vorzugsweise auch mit Celluloseether nachgranuliert.

Anhand der folgenden Tabelle, die Siebdurchgänge angibt, soll beispielhaft verdeutlicht werden, dass die Verwendung der Granulierhilfsmittel, insbesondere des MgO, die Granulierung unterstützt bzw. fördert, so dass eine erheblich verbesserte Agglomerierung erzielt werden kann. Unter ansonsten gleichen Bedingungen und mit gleichen zusatzmengen wurde eine Mehlfraktion und eine körnige Fraktion eines Porenbetons, einmal ohne MgO und einmal mit MgO, granuliert.

| | Fraktionen [Gew.%] | | Summenkurve [Gew.%] | |
|---|---|---|---|---|
| Maschenweite | mit MgO | Ohne MgO | mit MgO | ohne MgO |
| < 0,090 mm | 2,5 | 5,5 | 2,5 | 5,5 |
| 0,090 mm | 0,6 | 1,8 | 3,1 | 7,3 |
| 0,125 mm | 1,2 | 4,3 | 4,3 | 11,6 |
| 0,250 mm | 1,6 | 3,8 | 5,9 | 15,4 |
| 0,500 mm | 5,9 | 9,5 | 11,8 | 24,9 |
| 1,00 mm | 27,9 | 30,4 | 39,7 | 55,3 |
| 2,00 mm | 26,8 | 22,0 | 66,5 | 77,3 |
| 3,15 mm | 14,9 | 11,5 | 81,3 | 88,8 |
| 4,00 mm | 18,7 | 11,2 | 100,0 | 100,0 |

Das Ergebnis zeigt insbesondere unter der Rubrik Fraktionen, dass mit MgO tatsächlich größere Granalien und damit bessere Granulierungen erzielbar sind. Die in der Tabelle angegebenen Werte beziehen sich auf Gewichtsprozente.

Die Erfindung gelingt insbesondere, wenn Mehlfraktionen mit Korngrößen unter 1000 µm, insbesondere unter 500 µm, verwendet bzw. mitverwendet werden. Die Erfindung gelingt nicht mit der erforderlichen Qualität der Granalien, wenn Mehlfraktionen < 1000 µm fehlen oder nur in Mengen unter 20 Gew.-% vorhanden sind und körnige Calciumsilikathydrat-Materialien im Korngrößenbereich von 1000 bis 8000 µm, insbesondere von 1500 bis 5000 µm, granuliert werden. Werden feinere Mehle verwendet, verschiebt sich diese Grenze der Mehlzusammensetzungen auch noch unter 20 Gew.-%.

Nach einer besonderen Verfahrensvariante dieser Ausführungsform der Erfindung werden zunächst die Mehlfraktionen in einem Granuliermischer mit Wasser z.B. in den bereits eingegebenen Mengen von 15 bis 50, insbesondere von 20 bis 30 Gew.-%, zu einem Slurry gemischt. Erst danach werden die körnigen Fraktionen zugegeben. Die daraus resultierenden Granalien weisen in überraschender Weise eine bessere Wasseraufnahmekapazität und höhere Abriebfestigkeit und bessere Abrundung auf.

## Patentansprüche

1. Mineralisches Granulat im Wesentlichen aus agglomerierten, zumindest mikroporösen, vorzugsweise Mikroporen und Makroporen aufweisenden Calciumsilikathydrat-Materialkörner aufweisenden Granalien mit einem Schüttgewicht nach DIN EN 1097-3: 1998, kleiner 700 g/l, wobei
- das Calciumsilikathydrat-Material ein Mehl ist und mit Mehlkorngrößen < 1200 µm, insbesondere < 1000 µm, sowie mit einem Kornverteilungsmaximum einer Gaußschen Kornverteilung unter 500 µm vorliegt
oder
- das Calciumsilikathydrat-Material sowohl mit Mehlfraktionskorngrößen mit einem Kornverteilungsmaximum von unter 500 µm als auch mit körnigen Kornfraktionen bis 8 mm, insbesondere bis 6 mm, und Gaußscher Kornverteilung mit einem Kornverteilungsmaximum zwischen 2,5 und 4 mm vorliegt und insbesondere die Mehlfraktion und die körnige Fraktion mit jeweils einer unterscheidbaren Gaußschen Kornverteilung infolge einer Ausfallkörnung vorliegen, wobei Kornfraktionen zwischen der Mehlfraktion und der körnigen Kornfraktion fehlen oder nur in untergeordneten Mengen von unter 10 Gew.-%, vorzugsweise unter 5 Gew.%, vorhanden sind und die Mehlfraktion nicht unter 20 Gew.% im Calciumsilikathydrat-Material vorhanden ist
**dadurch gekennzeichnet, daß**
- in der Matrix der Granalien Magnesiumhydroxid und/oder Calciumhydroxid-Partikel und/oder Bentonit-Partikel und/oder Stärke, insbesondere kaltwasserlösliche Kartoffelstärke, und/oder Stärkederivate wie Glukosesirup, und/oder Dextrinlösung in Mengen von 0,5 bis 10 Gew.% und 20 bis 100 Gew.-%, insbesondere 50 bis 75 Gew.% Calciumsilikathydrat-Materialmehl enthalten sind

2. Granulat nach Anspruch 1, **dadurch gekennzeichnet, dass** die Hydroxide mit Mehlkorngrößen < 1200 µm, insbesondere < 1000 µm, vorliegen.

3. Granulat nach einem oder mehreren der Ansprüche 1 und/oder 2, **dadurch gekennzeichnet, dass** die Hydroxide in Mengen von 1 bis 8 Gew.-%, insbesondere von 2 bis 4 Gew.-%, bezogen auf das Calciumsilikathydrat-Material, vorliegt.

4. Granulat nach einem oder mehreren der Ansprüche 1 bis 3, **dadurch gekennzeichnet, dass** das Calciumsilikathydrat-Material mikroporös (Porendurchmesser < 100 µm) und makroporös (Porendurchmesser über 500 µm) ist.

5. Granulat nach Anspruch 4, **dadurch gekennzeichnet, dass** das Calciumsilikathydrat-Material aus Porenbeton- und/oder Schaumbetonmaterial besteht.

6. Granulat nach einem oder mehreren der Ansprüche 1 bis 5, **dadurch gekennzeichnet, dass** zwischen den Fraktionen eine Ausfallkörnung bzw. Körnungslücke vorhanden ist, indem zwischen den Gaußschen Komverteilungskurven eine Körnungslücke vorliegt.

7. Granulat nach einem oder mehreren der Ansprüche 1 bis 5, **dadurch gekennzeichnet, dass** sich die Gaußschen Kornverteilungskurven (Glockenkurven) teilbereichsweise überschneiden.

8. Granulat nach einem oder mehreren der Ansprüche 1 bis 7, **gekennzeichnet durch** Schüttgewichte zwischen 450 und 700 g/l, insbesondere zwischen 500 und 600 g/l.

9. Granulat nach einem oder mehreren der Ansprüche 1 bis 8, **gekennzeichnet durch** eine Wasseraufnahmekapazität zwischen 70 und 180 Gew.-%, insbesondere 80 und 130 Gew.-%.

10. Granulat nach einem oder mehreren der Ansprüche 1 bis 9, **gekennzeichnet durch** Korngrößen der Granalien zwischen 0,3 und 10,0 mm, insbesondere zwischen 0,5 und 8,0 mm.

11. Granulat nach einem oder mehreren der Ansprüche 1 bis 10, **dadurch gekennzeichnet, dass** die Granalien insbesondere zur Reststaubbindung Carboxylmethylcellulose, vorzugsweise in Mengen von 0,1 bis 2,0 Gew.-%, insbesondere von 0,2 bis 1,0 Gew.-%, aufweisen, oder zur Klumpenbildung und Reststaubbindung 3 bis 10 Gew.-% enthalten.

12. Verfahren zur Herstellung eines Granulats nach einem oder mehreren der Ansprüche 1 bis 11, **dadurch gekennzeichnet, dass** ein Calciumsilikathydratmaterial-Mehl und gegebenenfalls zusätzlich körniges Calciumsilikathydratmaterial mit mindestens einem Granulierhilfsmittel, ausgewählt aus der Gruppe MgO, CaO, Mg(OH)₂ und Ca(OH)₂, Stärke, Stärkederivate, trocken vorgemischt, das Gemenge anschließend in einem Pelletiermischer während des Mischens mit Wasser versetzt wird oder die Mehlfraktionen mit Wasser vorgemischt und anschließend das körnige Material zugegeben wird und durch Granulieren Granalien erzeugt werden, die Granalien dem Pelletiermischer entnommen und getrocknet werden.

13. Verfahren nach Anspruch 12, **dadurch gekennzeichnet, dass** ein Nachmischen durchgeführt und dabei Carboxylmethylcellulose zur Reststaubbindung, vorzugsweise in Mengen von 0,1 bis 1,0 Gew.-%, bezogen auf die Mischung, oder zur Klumpenbildung und Reststaubbindung 3 bis 10 Gew.% zugegeben wird.

14. Verfahren nach Anspruch 12 und/oder 13, **dadurch gekennzeichnet, dass** körnige mit dem Mehl zu vermischende Ausgangs-Calciumsilikathydratprodukte mit folgender Kornverteilung verwendet werden:
| | | |
|---|---|---|
| > 7 | mm: | bis 10 Gew.-%, |
| 5 bis 7 | mm: | 10 bis 30 Gew.-%, |
| 4 bis 5 | mm: | 10 bis 40 Gew.-%, |
| 3,15 bis 4 | mm: | 10 bis 40 Gew.-%, |
| 1 bis 3,5 | mm: | 10 bis 60 Gew.-%, |
| < 1 | mm: | bis 10 Gew.-% |

15. Verfahren nach einem oder mehreren der Ansprüche 12 bis 14, **dadurch gekennzeichnet, dass** folgende Mischungsverhältnisse von Mehlfraktion zu körniger Kornfraktion verwendet werden:
Mehlfraktion : Kornfraktion = 3 : 1 bis 2 : 3,
insbesondere bis 2 : 1 Gew.%.

16. Verwendung eines Granulats nach einem oder mehreren der Ansprüche 1 bis 11, insbesondere hergestellt nach einem oder mehreren der Ansprüche 12 bis 15, als Tierstreu.

17. Verwendung eines Granulats nach einem oder mehreren der Ansprüche 1 bis 11, insbesondere hergestellt nach einem oder mehreren der Ansprüche 12 bis 15, als Schüttung im Bauwesen.

18. Verwendung eines Granulats nach einem oder mehreren der Ansprüche 1 bis 11, insbesondere hergestellt nach einem oder mehreren der Ansprüche 12 bis 15, als Öl- und/oder Chemikalienbinder.

## Claims

1. A mineral granulate substantially composed of agglomerated, at least microporous granules comprising calcium silicate hydrate material grains, preferably comprising micropores and macropores, with a bulk density according to DIN EN 1097-3: 1998 of less than 700 g/I, wherein
- the calcium silicate hydrate material is a flour and is present with flour grain sizes < 1200 µm, in particular < 1000 µm, and with a grain size distribution maximum of a Gaussian grain size distribution of less than 500 µm
or
- the calcium silicate hydrate material is present both with flour fraction grain sizes with a grain size distribution maximum of less than 500 µm and with granular grain fractions of up to 8 mm, in particular up to 6 mm, and a Gaussian grain size distribution with a grain size distribution maximum of between 2.5 and 4 mm, and in particular the flour fraction and the granular fraction are each present with a distinguishable Gaussian grain size distribution as a result of gap grading, wherein grain fractions between the flour fraction and the granular grain fraction are absent or are present only in minor quantities of less than 10 wt.%, preferably less than 5 wt.%, and the flour fraction is present in a quantity of no less than 20 wt.% in the calcium silicate hydrate material
**characterised in that**
- in the matrix of the granules, magnesium hydroxide and/or calcium hydroxide particles and/or bentonite particles and/or starch, in particular cold-water-soluble potato starch, and/or starch derivatives such as glucose syrup and/or dextrin solution in quantities of 0.5 to 10 wt.% and 20 to 100 wt.%, in particular 50 to 75 wt.%, calcium silicate hydrate material flour are contained.

2. The granulate according to claim 1, **characterised in that** the hydroxides are present with flour grain sizes < 1.200 µm, in particular < 1000 µm.

3. The granulate according to one or more of claims 1 and/or 2, **characterised in that** the hydroxides are present in quantities of 1 to 8 wt.%, in particular of 2 to 4 wt.%, based on the calcium silicate hydrate material.

4. The granulate according to one or more of claims 1 to 3, **characterised in that** the calcium silicate hydrate material is microporous (pore diameter < 100 µm) and macroporous (pore diameter over 500 µm).

5. The granulate according to claim 4, **characterised in that** the calcium silicate hydrate material consists of aerated autoclaved concrete material and/or foamed concrete material.

6. The granulate according to one or more of claims 1 to 5, **characterised in that** a gap grading or grain size gap exists between the fractions by the presence of a grain size gap between the Gaussian grain size distribution curves.

7. The granulate according to one or more of claims 1 to 5, **characterised in that** sections of the Gaussian grain size distribution curves (bell curves) overlap.

8. The granulate according to one or more of claims 1 to 7, **characterised by** bulk densities of between 450 and 700 g/l, in particular between 500 and 600 g/l.

9. The granulate according to one or more of claims 1 to 8, **characterised by** a water absorption capacity of between 70 and 180 wt.%, in particular 80 and 130 wt.%.

10. The granulate according to one or more of claims 1 to 9, **characterised by** grain sizes of the granules of between 0.3 and 10.0 mm, in particular between 0.5 and 8.0 mm.

11. The granulate according to one or more of claims 1 to 10, **characterised in that**, in particular for residual dust binding, the granules comprise carboxymethyl cellulose, preferably in quantities of 0.1 to 2.0 wt.%, in particular of 0.2 to 1.0 wt.%, or contain 3 to 10 wt.% for agglomeration and residual dust binding.

12. A method of producing a granulate according to one or more of claims 1 to 11, **characterised in that** a calcium silicate hydrate material flour and optionally also granular calcium silicate hydrate material are premixed dry with at least one granulating aid selected from the group of MgO, CaO, Mg(OH)₂ and Ca(OH)₂, starch and starch derivatives and water is then added to the mixture in a pelletising mixer during mixing or the flour fractions are premixed with water and then the granular material is added and granules are produced by granulation, the granules are removed from the pelletising mixer and dried.

13. The method according to claim 12, **characterised in that** a secondary mixing is performed during which carboxymethyl cellulose is added, preferably in quantities of 0.1 to 1.0 wt.%, based on the mixture, for residual dust binding or 3 to 10 wt.% for agglomeration and residual dust binding.

14. The method according to claim 12 and/or 13, **characterised in that** granular calcium silicate hydrate starting products to be mixed with the flour are used with the following grain size distribution:
| | | |
|---|---|---|
| > 7 | mm: | up to 10 wt.%, |
| 5 to 7 | mm: | 10 to 30 wt.%, |
| 4 to 5 | mm: | 10 to 40 wt.%, |
| 3.15 to 4 | mm: | 10 to 40 wt.%. |
| 1 to 3.5 | mm: | 10 to 60 wt.%. |
| < 1 | mm: | up to 10 wt.% |

15. The method according to one or more of claims 12 to 14, **characterised in that** the following mixture ratios of flour fraction to granular grain fraction are used:
flour fraction : grain fraction = 3 : 1 to 2 : 3,
in particular up to 2 : 1 wt.%.

16. Use of a granulate according to one or more of claims 1 to 11, in particular produced according to one or more of claims 12 to 15, as animal litter.

17. Use of a granulate according to one or more of claims 1 to 11, in particular produced according to one or more of claims 12 to 15, as fill in the construction sector.

18. Use of a granulate according to one or more of claims 1 to 11, in particular produced according to one or more of claims 12 to 15, as an oil and/or chemical binder.

## Revendications

1. Granulat minéral constitué essentiellement de granulés agglomérés, au moins microporeux, présentant des granulés de matériau à base d'hydrate de silicate de calcium, présentant de préférence des micropores et des macropores, ayant une masse volumique en vrac, selon la norme DIN EN 1097-3 : 1998, inférieur à 700 g/l, dans lequel :
- le matériau à base d'hydrate de silicate de calcium constitue des farines et se présente sous la forme de farines ayant des tailles de grain < 1200 µm, en particulier < 1000 µm, et ayant également une distribution granulométrique maximale d'une distribution granulométrique gaussienne inférieure à 500 µm
ou
- le matériau à base d'hydrate de silicate de calcium est présent aussi bien avec des tailles de grain de fraction de farines avec une distribution granulométrique maximale inférieure à 500 µm, qu'avec des fractions granulométriques allant jusqu'à 8 mm, en particulier jusqu'à 6 mm, et avec une distribution granulométrique gaussienne présentant une distribution granulométrique maximale comprise entre 2,5 et 4 mm, et en particulier la fraction de farines et la fraction granuleuse se présentent respectivement avec une distribution granulométrique gaussienne pouvant être différenciée du fait d'une granularité discontinue, dans lequel les fractions granulométriques entre la fraction de farines et la fraction granulaire sont absentes ou sont présentes uniquement en des quantités secondaires inférieures à 10 % en poids, de préférence inférieures à 5 % en poids et que la fraction de farines est présente dans le matériau à base d'hydrate de silicate de calcium en une quantité qui n'est pas inférieure à 20 % en poids,
**caractérisé en ce que**
- la matrice des granulés contient de l'hydroxyde de magnésium et/ou des particules d'hydroxyde de calcium et/ou des particules de bentonite et/ou de l'amidon, en particulier de l'amidon de pomme de terre soluble dans l'eau froide, et/ou des dérivés d'amidon tels que du sirop de glucose, et/ou une solution de dextrine en des quantités allant de 0,5 à 10 % en poids et des farines de matériau à base d'hydrate de silicate de calcium en des quantités allant de 20 à 100 % en poids, en particulier allant de 50 à 75 % en poids.

2. Granulat selon la revendication 1, **caractérisé en ce que** les hydroxydes sont présents avec des tailles de grain de farines < 1200 µm, en particulier < 1000 µm.

3. Granulat selon l'une quelconque ou plusieurs des revendications 1 et/ou 2, **caractérisé en ce que** les hydroxydes sont présents en des quantités allant de 1 à 8 % en poids, en particulier allant de 2 à 4 % en poids, rapporté au matériau à base d'hydrate de silicate de calcium.

4. Granulat selon l'une quelconque ou plusieurs des revendications 1 à 3, **caractérisé en ce que** le matériau à base d'hydrate de silicate de calcium est microporeux (diamètre des pores < 100 µm) et macroporeux (diamètre des pores supérieur à 500 µm).

5. Granulat selon la revendication 4, **caractérisé en ce que** le matériau à base d'hydrate de silicate de calcium est constitué d'un matériau de béton poreux et/ou d'un matériau de béton cellulaire.

6. Granulat selon l'une quelconque ou plusieurs des revendications 1 à 5, **caractérisé en ce qu'**une granularité discontinue ou une lacune granulométrique est présente entre les fractions du fait qu'une lacune granulométrique est présente entre les courbes granulométriques gaussiennes.

7. Granulat selon l'une quelconque ou plusieurs des revendications 1 à 5, **caractérisé en ce que** les courbes granulométriques gaussiennes (courbes en cloche) se recoupent partiellement par endroits.

8. Granulat selon l'une quelconque ou plusieurs des revendications 1 à 7, **caractérisé par** un poids en vrac compris entre 450 et 700 g/l, en particulier compris entre 500 et 600 g/l.

9. Granulat selon l'une quelconque ou plusieurs des revendications 1 à 8, **caractérisé par** une capacité d'absorption de l'eau comprise entre 70 et 180 % en poids, en particulier comprise entre 80 et 130 % en poids.

10. Granulat selon l'une quelconque ou plusieurs des revendications 1 à 9, **caractérisé par** des tailles de grain des granulés comprises entre 0,3 et 10,0 mm, en particulier entre 0,5 et 8,0 mm.

11. Granulat selon l'une quelconque ou plusieurs des revendications 1 à 10, **caractérisé en ce que** les granulés présentent, en particulier aux fins de la fixation des poussières résiduelles, de la carboxyméthylcellulose, de préférence en des quantités allant de 0,1 à 2,0 % en poids, en particulier allant de 0,2 à 1,0 en poids, ou en contiennent, aux fins de la formation de grumeaux et aux fins de la fixation des poussières résiduelles, en des quantités allant de 3 à 10 % en poids.

12. Procédé servant à fabriquer un granulat selon l'une quelconque ou plusieurs des revendications 1 à 11, **caractérisé en ce que** des farines de matériau à base d'hydrate de silicate de calcium et, éventuellement, en supplément, un matériau granulaire à base d'hydrate de silicate de calcium sont mélangés au préalable à sec à au moins un adjuvant de granulation, choisi parmi le groupe comprenant du MgO, du CaO, du Mg(OH)₂ et du Ca(OH)₂, de l'amidon, des dérivés d'amidon, **en ce qu'**ensuite le mélange est mélangé à de l'eau dans un mélangeur-granulateur lors de l'opération de mélange, ou **en ce que** les fractions de farines sont mélangées au préalable à de l'eau puis le matériau granulaire est ajouté et des granulés sont produits par granulation, lesquels granulés sont prélevés du mélangeur-granulateur et sont séchés.

13. Procédé selon la revendication 12, **caractérisé en ce qu'**on effectue ultérieurement un mélangeage, et **en ce que**, dans ce cadre, de la carboxyméthylcellulose est ajoutée, aux fins de la fixation des poussières résiduelles, de préférence en des quantités allant de 0,1 à 1,0 % en poids, rapporté au mélange, ou, aux fins de la formation de grumeaux et de la fixation des poussières résiduelles, en des quantités allant de 3 à 10 % en poids.

14. Procédé selon la revendication 12 et/ou 13, **caractérisé en ce qu'**on utilise des produits de départ granulaires à base d'hydrate de silicate de calcium à mélanger aux farines, présentant une distribution granulométrique suivante :
| | | |
|---|---|---|
| > 7 | mm : | jusqu'à 10 % en poids ; |
| 5 à 7 | mm : | 10 à 30 % en poids; |
| 4 à 5 | mm : | 10 à 40 % en poids ; |
| 3,15 à 4 | mm : | 10 à 40 % en poids ; |
| 1 à 3,5 | mm : | 10 à 60 % en poids ; |
| < 1 | mm : | jusqu'à 10 % en poids. |

15. Procédé selon l'une quelconque ou plusieurs des revendications 12 à 14, **caractérisé en ce que** l'on utilise des proportions de mélange entre la fraction de farines et la fraction granulaire qui suivent :
fraction de farines: fraction granulaire = 3:1 à 2:3 ;
en particulier jusqu'à 2:1 % en poids.

16. Utilisation d'un granulat selon l'une quelconque ou plusieurs des revendications 1 à 11, fabriqué en particulier selon l'une quelconque ou plusieurs des revendications 12 à 15, comme litière.

17. Utilisation d'un granulat selon l'une quelconque ou plusieurs des revendications 1 à 11, fabriqué en particulier selon l'une quelconque ou plusieurs des revendications 12 à 15, comme matériau de remblayage dans le secteur de la construction.

18. Utilisation d'un granulat selon l'une quelconque ou plusieurs des revendications 1 à 11, fabriqué en particulier selon l'une quelconque ou plusieurs des revendications 12 à 15, comme produit liant pour huiles et/ou produits chimiques.
